# EUROPEAN PATENT APPLICATION

(11) **EP 2 224 699 A1**
(43) Date of publication of application: **01.09.2010**
(21) Application number: 09153998.1
(22) Date of filing: 27.02.2009
(51) Int. Cl.: H04M 1/56, G06Q 30/00

(54) **system and method for delivery and display of messages**

(71) Applicant: RESEARCH IN MOTION LIMITED, Waterloo, Ontario N2L 3W8 (CA)
(72) Inventor: Bosan, Sorel, Waterloo Ontario N2L 3L3 (CA); Zima, Janice, Waterloo Ontario N2L 3L3 (CA)
(74) Representative: Patel, Binesh

(57) **Abstract**

A method and system for delivery and display of a message on a communication device. A dialed first digit of a multi-digit recipient phone number being called is received at the communication device. A message accessibly stored in memory is accessed, and display of the message is initiated on a display screen of the communication device. A call connection may be attempted with the recipient phone number. The call connection status is monitored, and a response indicative of the status may be generated to the communication device. In one embodiment, the message may be an advertisement message.

## Description

### FIELD

The present disclosure relates generally to a system and method for delivery and display of messages and specifically to a system and method for delivering and displaying messages while a user is engaged in dialing a phone number on a communication device.

### BACKGROUND

With the proliferation of communication devices, communication providers are constantly looking for new ways and mediums to communicate their messages to a large number of users. This is challenging because once users become accustomed to a given communication venue, they may tend to ignore or skip the messages. Especially given the relatively widespread usage of handheld wireless devices, communication providers would be desirous of providing messages directed to such users.

### BRIEF DESCRIPTION OF THE DRAWINGS

Embodiments are illustrated by way of example only and not limitation, with reference to the following drawings in which like reference numerals indicate corresponding or similar elements, and in which:

Figure 1 is a block diagram illustrating a wireless communication system and a communication device which communicates within this system in accordance with one embodiment;

Figure 2 is an exemplary block diagram of the communication device of Figure 1;

Figure 3A is an exemplary diagram of the communication device of Figure 1 for delivering and displaying messages;

Figure 3B illustrates an alternate embodiment of the communication device of Figure 1 for delivering and displaying messages;

Figure 3C illustrates yet another embodiment of the communication device of Figure 1 for delivering and displaying messages;

Figure 4A illustrates an exemplary flow of interactions among components of the system of Figure 1 for delivering and displaying messages to communication devices;

Figure 4B illustrates a further exemplary flow of interactions among components of the system of Figure 1 for delivering and displaying messages to communication devices; and

Figure 5 illustrates yet another variation of the exemplary flow of interactions of the system of Figure 1.

### SUMMARY

Accordingly, there is a need for providing messages in venues such as communication devices in such a way that users will be motivated to listen to or review the messages. Especially if provided without regard to the degree of intrusiveness of the messages, users may be less likely to skip or ignore the messages. While in general users may not appreciate intrusive messages, some form of financial compensation or other incentive may be provided to a user in return for allowing messages that may be considered intrusive.

There is provided a computer implemented method for delivery and display of a message on a communication device, the method comprising: receiving, at the communication device, a call initiation action associated with a recipient phone number being called; accessing the message accessibly stored in a memory; initiating display of the message on a display screen of the communication device on a first portion of the display screen contiguous with a second portion of the display screen for displaying the recipient phone number being called; attempting a call connection with the recipient phone number; and receiving a call connection status indication of the attempted call connection with the recipient phone number.

In one embodiment, the message may comprise an advertising logo

In another aspect, there is provided a communication device for displaying a message, the communication device comprising: a processor and a memory coupled thereto, the memory storing instructions and data configuring the processor to perform the method.

In yet another embodiment, the communication device may comprise a wireless handheld communication device.

Also provided is a computer implemented system for delivering and displaying a message on a communication device, the system comprising: a message display module configured to access the message from an accessible memory location, and to initiate display of the message on a first portion of a display screen of the communication device, the first portion being contiguous with a second portion of the display screen for displaying a recipient phone number, in response to a call initiation action associated with the recipient phone number; and a call connection status monitor configured to provide an indication of a call connection status of an attempted call connection with the recipient phone number.

In yet another aspect, provided is a communication device for displaying a message, the communication device comprising: a message display module configured to access the message from an accessible memory location, and to initiate display of the message on a first portion of a display screen of the communication device, the first portion being contiguous with a second portion of the display screen for displaying a recipient phone number, the display of the message being initiated in response to a call initiation action associated with the recipient phone number; and a call connection status monitor configured to provide an indication of a call connection status of an attempted call connection with the recipient phone number.

### DETAILED DESCRIPTION

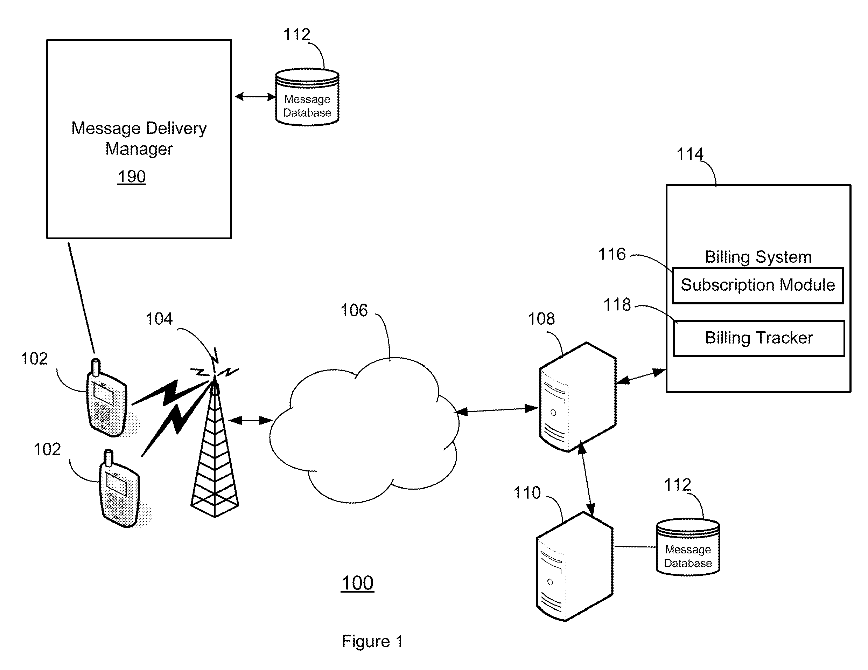

Referring to Figure 1, a communication system is illustrated generally by numeral 100. The communication system 100 comprises a plurality of communication devices 102, a base station or antenna 104, a communication network 106, a carrier system 108, a billing system 114, and a message delivery manager 190 having access to message database 112. It will be understood by a person skilled in the art that the communication system 100 of Figure 1 has been illustrated with a number of pertinent components for exemplary purposes only. Accordingly, a plurality of communication devices 102, base stations 104, communication networks 106, carrier systems 108, billing systems 114, message delivery manager 190 and related message databases 112 may be envisaged as needed.

The communication devices 102 are in communication with one another (or other communication devices not shown) via the communication network 106 and the base station 104. Accordingly, the communication network 106 may include several components such as a wireless network, a relay, a corporate server 110 and/or a mobile data server (MDS) for relaying data between the base station 104 and the carrier system 108. An example of a corporate server 110 is the BlackBerry Enterprise Server (BES) provided by Research In Motion Limited. The communication network 106 may also be configured to support data and voice communications under the Voice over Internet Protocol (VoIP) scheme.

Communication system 100 is configured to deliver and display one or more messages to communication device 102 once the user begins dialing a phone number on communication device 102. Further, the communication system 100 may be configured to track usage of the messages (i.e. according to detecting pre-determined parameters such as length of time that the message is played on the communication device 102) and to provide financial compensation to a user of the communication device 102 via the billing system 114 for allowing the messages to be outputted on the communication device 102. For example, the financial compensation may be provided proportionate to the cumulative time of playing the message over a given billing cycle. The messages may be accessed by communication device 102 either directly via the message delivery manager system 190 or indirectly via the carrier system 108 to the communication device 102.

Wireless communication services are typically provided on a service contract basis where the communication device user enters a service contract with a wireless carrier to have wireless service provided to the communication device 102. Accordingly, the carrier system 108 may be configured to store information such as the communication device 102 user(s) name and billing information, wireless service plan, equipment type, and any other pertinent information to facilitate wireless communication for the communication device 102. The carrier system 108 is a further coupled for communication with carrier infrastructure including a billing system 114. The billing system 114 comprises a subscription module 116, and a billing tracker 118. Subscription module 116 stores information related to communication services which the communication device is enrolled into. Billing tracker 118 may be configured to track and store billing information for the communication device 102 based on the services plan and usage of various services available to the communication device 102.

Referring again to Figure 1, the carrier system 108 is coupled to the message delivery manager 190 having access to a message database 112. The message database 112 stores a plurality of messages thereon for access by the message delivery manager 190. The message delivery manager 190 is configured to deliver messages for display once a user begins dialing a multi-digit phone number of a recipient, at which point the user's attention is typically directed at the display of communication device 102. One or more messages may be downloaded by the communication device 102 as desired (i.e. via the web browser of the communication device 102) and stored on the communication device 102 for use as permitted messages. That is, the user may browse one or more web pages associated with message delivery manager 190 to select and download certain messages or categories of messages to be displayed upon the user dialing the first digit of a phone number being called. Alternately, it is contemplated that messages may be accessed indirectly from a web based networked server device 110 having access to message database 112. In yet another embodiment, not shown, the messages may be accessed by a wired desktop or laptop computer networked to message database 112, and later downloaded to communication device 102, when the latter is connected to the wired desktop or laptop computer.

It will be appreciated by a person of ordinary skill in the art that the communication system 100 described herein is exemplary and that changes may be made to one or more components to accommodate different network configurations without affecting the scope of the disclosure herein. Further, although the present description specifically recites a communication device 102, it will be appreciated that other types of devices, including both wired and wireless devices, may be employed.

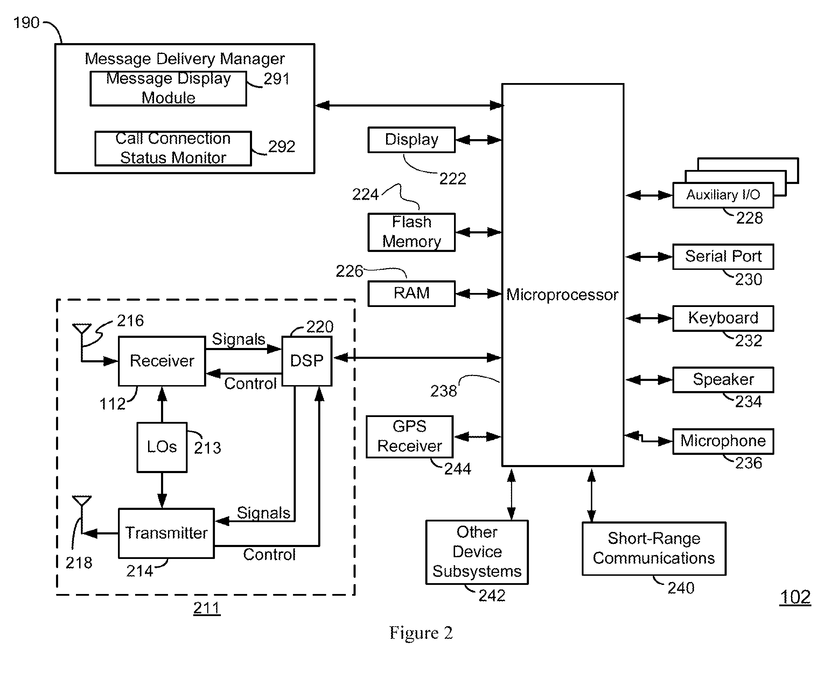

Referring to Figure 2, components of the communication device 102 are illustrated in greater detail. The communication device 102 may be a two-way communication device having both voice and data communication capabilities, including the capability to communicate with other computer systems. Depending on the functionality provided by the communication device 102, it may be referred to as a data messaging device, a two-way pager, a cellular telephone with data messaging capabilities, a wireless Internet appliance, or a data communication device.

The communication device 102 includes a communication subsystem 211, which includes a receiver 212, a transmitter 214, and associated components, such as one or more embedded or internal antenna elements 216 and 218, local oscillators (LOs) 213, and a processing module such as a digital signal processor (DSP) 220. As will be apparent to those skilled in field of communications, the particular design of the communication subsystem 211 depends on the communication network in which communication device 102 is intended to operate.

The communication device 102 includes a microprocessor 238 which controls general operation of the communication device 102. The microprocessor 238 also interacts with additional device subsystems such as a display 222, a flash memory 224, a random access memory (RAM) 226, auxiliary input/output (I/O) subsystems 228, a serial port 230, a keyboard 232, a speaker 234, a microphone 236, a short-range communications subsystem 240 such as Bluetooth™ for example, and any other device subsystems or peripheral devices generally designated at 242. The communication device 102 may also include a positioning device 244, such as a GPS receiver for example, for receiving positioning information. As will be described, the GPS receiver may be configured to detect and provide location information in order to determine if the location of the communication device 102 meets pre-determined location criteria (i.e. criteria set by the billing system 114). For example, based on whether the pre-determined location information is met, the billing system 114 may then determine whether to provide financial compensation for the audible message outputted on the communication device 102.

Operating system software used by the microprocessor 238 may be stored in a persistent store of memory such as the flash memory 224, which may alternatively be a read-only memory (ROM) or similar storage element (not shown). Those skilled in the art will appreciate that the operating system, specific device applications, or parts thereof, may be temporarily loaded into a volatile store of memory such as RAM 226.

The microprocessor 238, in addition to its operating system functions, typically enables execution of software applications on the communication device 102. A predetermined set of applications, which control basic device operations, is installed on the communication device 102 during its manufacture. These basic operations typically include data and voice communication applications, for example. Additionally, applications may also be loaded onto the communication device 102 through the network 106, an auxiliary I/O subsystem 228, serial port 230, short-range communications subsystem 240, or any other suitable subsystem 242, and installed by a user in RAM 226, or the persistent store 224, for execution by the microprocessor 238. Such flexibility in application installation increases the functionality of the communication device 102 and may provide enhanced on-device features, communication-related features, or both.

The display screen 222 is used to visually present an application's graphical user interface (GUI) to the user. The user can manipulate application data by modifying information on the GUI using an input device such as the keyboard 232 for example. Depending on the type of communication device 102, the user may be provided with other types of input devices, such as, for example, a scroll wheel, trackball, light pen or touch sensitive display screen.

Referring again to Figure 2, the communication device 102 further includes message delivery manager 190. As described earlier, the message delivery manager 190 may be configured to retrieve messages from the message database 112 as needed or messages may be pre-loaded and stored onto the memory (i.e. flash memory 224 or RAM 226) of communication device 102 for subsequent access. The message delivery manager 190 may be a software solution that is included as part of the operating system or as an application of the communication device 102.

A user, using communication device 102 in a phone mode, may initiate an action to call a recipient phone number. The recipient phone number may be a multi-digit number. For the purposes of conciseness in the discussion herein, the multi-digit phone number being called or dialed as the recipient of the phone call will be referred to simply as the recipient phone number. The action that the user takes to initiate a call may comprise manually dialing the sequential digits of recipient phone number, then activating or depressing a CALL or SEND key of communication device 102. The action that the user takes to initiate a call may also comprise selecting and activating or depressing a speed dial key associated with the recipient phone number, the recipient phone number being included among a list of phone number entries in an address book application of communication device 102. The action that a user takes to initiate a call may also consist of performing a search within communication device 102, based on a recipient's name or partial name, then selecting that recipient's phone number from among the address book list of entries, and activating the CALL or SEND functionality. Another action that a user take to initiate a call may consist of selecting or tapping a phone number presented in a hyperlink at a web page presented on display 222 of communication device 102. Yet another such action may comprise voice-activated dialing. The above actions described are exemplary, and not intended to be an exhaustive list of possible user actions to initiate a phone call to a recipient number.

Message display module 291 of message delivery manager module 190 may be configured to retrieve messages from the message database 112 as needed or messages may be pre-loaded and stored onto the memory, i.e. flash memory 224 or RAM 226 of communication device 102), then display the messages on screen 222 of communication device 102 once a user initiates a call action.

Tones may be generated once the user has completed dialing attempted a connection with the called recipient device. For example, number busy, network busy, and invalid number dialed tones may be generated in response to the attempted call connection with the recipient phone number. Connection status monitor 292 monitors the call connection status of the phone call as dialed by the user, and based on the tones generated, may provide an indication of call connection status at communication device 102.

In a case where the attempted call connection is successfully accomplished, a voice (or voicemail) response may be provided at the recipient phone number. Call connection status monitor 292, depending on the call connection status indicated at communication device 102, may provide a trigger for terminating display of the message on display 222 by message display module 291.

In one exemplary embodiment, message display module 291 may be configured to display a message on display screen 222 of communication device 102 for at least until any one of a number busy, network busy, or invalid number tones are generated as a result of the attempted call connection with the recipient phone number.

In another exemplary embodiment, message display module 291 may be configured to display the message on display screen 222 of communication device 102 for at least until a voice or answering machine message response is provided from the recipient phone number.

In a further exemplary embodiment, message display module 291 may be configured to display the message on display screen 222 of communication device 102 for at least as long as a user is manually dialing the sequential digits of the recipient phone number.

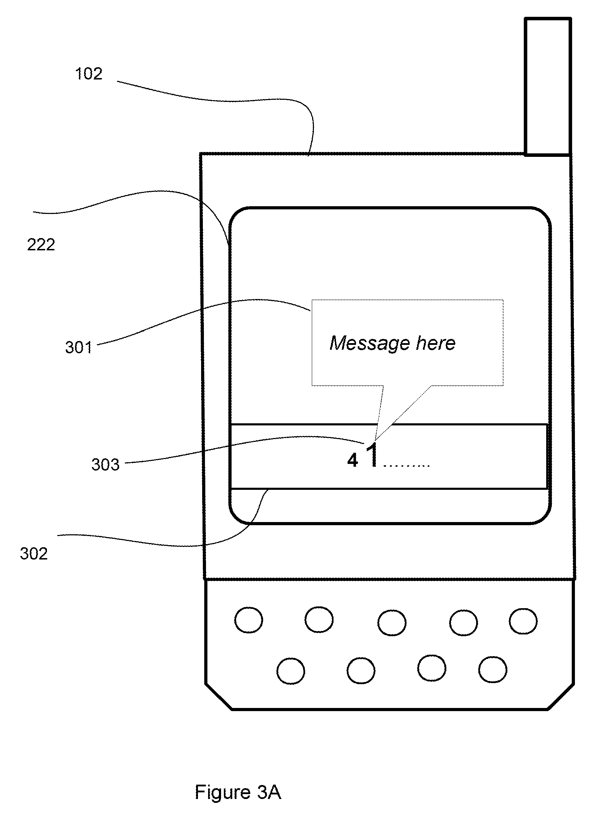

Referring to Figure 3A, shown is an exemplary diagram of the communication device of Figure 1 used for delivering and displaying messages. Each of the sequence of digits being dialed may have a different message associated therewith for display on message display module 291, as that digit is being dialed. In such a case, each different message would be displayed for the duration that a given digit is being dialed, until the next digit in the sequence is dialled and its respective message is displayed. As a given digit is dialed, a respective message associated with that digit, such as an advertising logo, may be displayed in message portion 301 of display screen 222, in a position contiguous with another portion 302 of display screen 222 for displaying the recipient phone number. In another embodiment, perhaps each message builds on to the previous message. For example, each "message" may comprise a letter, or a grouping of several letters, and after all digits are received the messages cumulatively spell out a brand. For example, alter 4-1-6-5-5-5-1-2-3-4 is received as user input, the message "B - L - A - C - K - B - E - R - R - Y" is shown (one letter at a time). Each letter of BLACKBERRY appeared with each digit of the phone number being entered.

Alternative scenarios other than a new message for each digit are also contemplated. The message may be changed every other digit. Or after any pre-determined number of digits.

Message portion 301 of display screen 222 may be presented in a manner that indicates which digit being dialed that it is associated with, such as by a visible pointer to the digit, or other means of visible indication. Message portion 301 of display screen 222 may incorporate use of a different display style from portion 302 of display screen 222 where the recipient phone number is being displayed, such as special text colors or background colors, and font types or styles optionally coupled with audible patterns, intended to capture and maintain the user's attention, without regard to the degree of intrusiveness to the user.

While dialing a telephone number, the user's attention will typically be focused on the number being dialed portion 302 of display screen 222. This is typically the case whether the user is dialing a recipient phone number manually, or is selecting a recipient phone number to be called from an address book list of phone entries, or is selecting a speed dial entry for calling the recipient phone number. By displaying the message in very close proximity, or contiguous with the digit or recipient number, a user will generally find it more compelling to pay attention to the displayed message. It is contemplated that other orientations and locations of recipient phone number portion 302 and message portion 301 within display screen 222 may be applied and used in communication device 102.

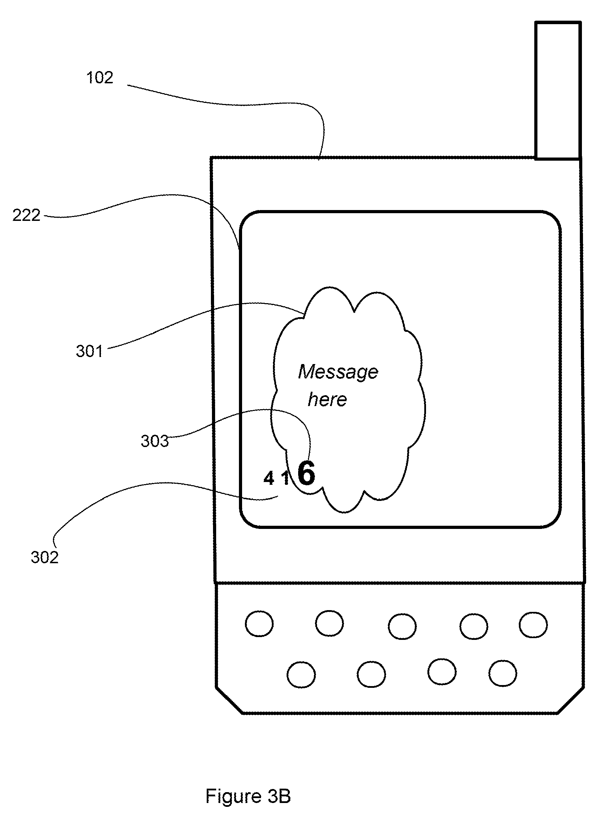

Figure 3B illustrates an alternate embodiment of the communication device of Figure 1 for delivering and displaying messages. Here, message portion 301 of display screen 222 may be presented in an alternate manner of visually indicating which digit being dialed that it is associated with, such as a common bounded area that visually incorporates the digit with the message being displayed.

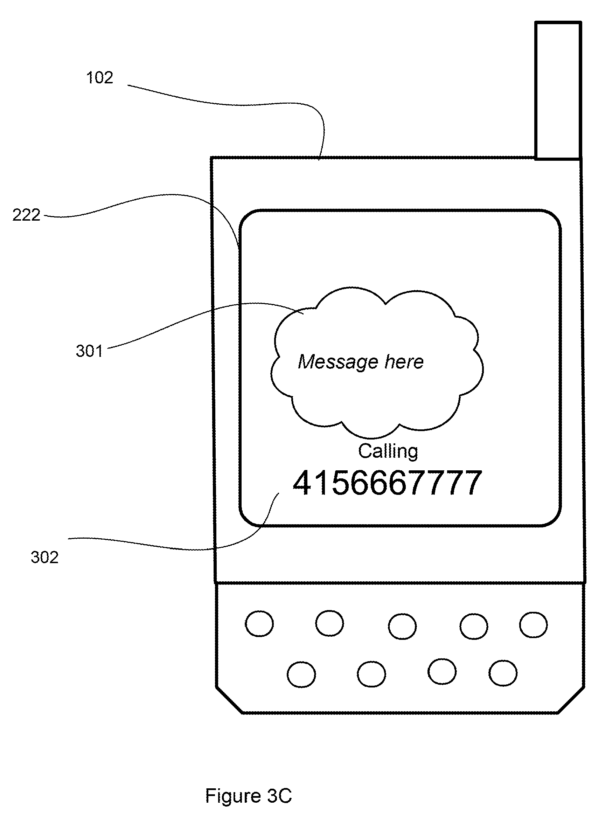

Figure 3C illustrates yet another embodiment of the communication device of Figure 1 for delivering and displaying messages. In this embodiment, a single message may be accessed and then displayed for at least the duration of time that the entire sequence of digits of a recipient phone number are dialed.

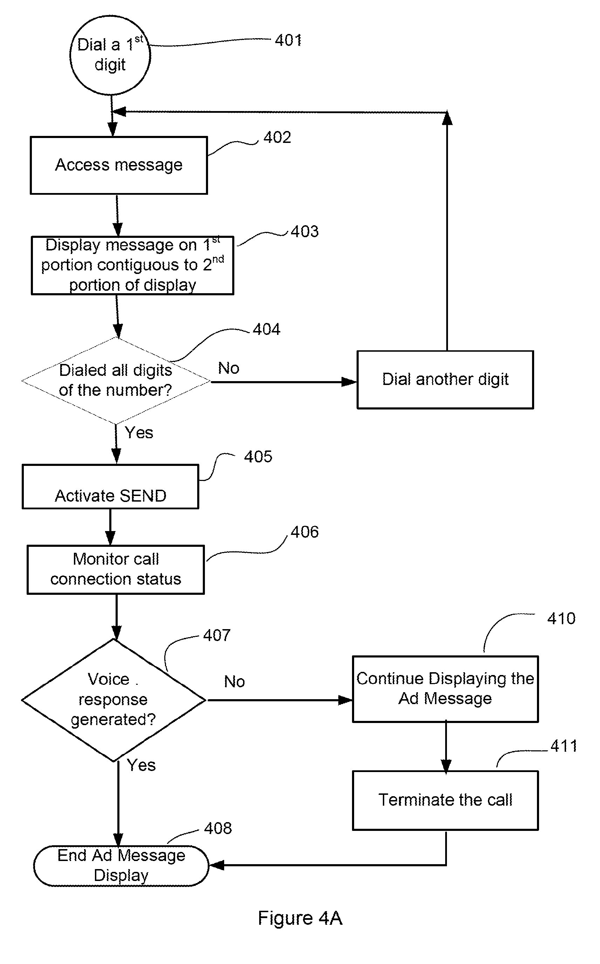

Figure 4A illustrates an exemplary flow of interactions among components of the system of Figure 1 for delivering and displaying messages to communication device 102. At step 401, a user of communication device 102 presses a first key towards calling an intended recipient's multi-digit phone number.

At step 402, message display module 291 accesses a message. The message may comprise an advertising message or an emergency notification message, for example. At step 403, message display module 291 initiates display of the message on message display portion 301 of display 222 in communication device 102.

At step 404, with every digit of the recipient phone number dialed, a different message, for example a marketing logo, associated therewith may be accessed and displayed, as described above.

At step 405, once the user has completed the dialing process, such as by dialing all digits manually or by pressing a speed-dial key, an attempt may be made to establish a phone connection with the call recipient, typically by depressing a SEND or CALL key.

At step 406, call connection status is monitored by call connection status monitor 292. Call connection monitor at communication device 102 provides an indication of the call status of the attempted call connection with the recipient phone number being called. In one exemplary embodiment, message display module 291 may be configured to display the message on display screen 222 of communication device 102 only until the user completes manually dialing the multi-digit recipient phone number and has activated the SEND or CALL keys.

It is contemplated that the SEND or CALL functionality discussed herein is not limited solely to activating or depressing discrete mechanical keys, but may also be accomplished using touch screen switch functionality in communication device 102, including but not limited to resistive- or capacitive-based touch screens.

At step 407, if the call connection status is indicated as call answered, such as via a voice response provided by the call recipient and detected at the communication device 102, then this state may constitute the trigger for terminating display of the message at step 408 on display 222 by message display module 291.

At step 410, alternatively, if the call connection status as monitored by call connection status monitor 292 is indicated as a number busy, network busy, or invalid telephone number, message display module 291 may continue the display of the message on display portion 301 of display 222 in communication device 102. The user may terminate the call at step 411, at which point the display of the message may terminate at step 408.

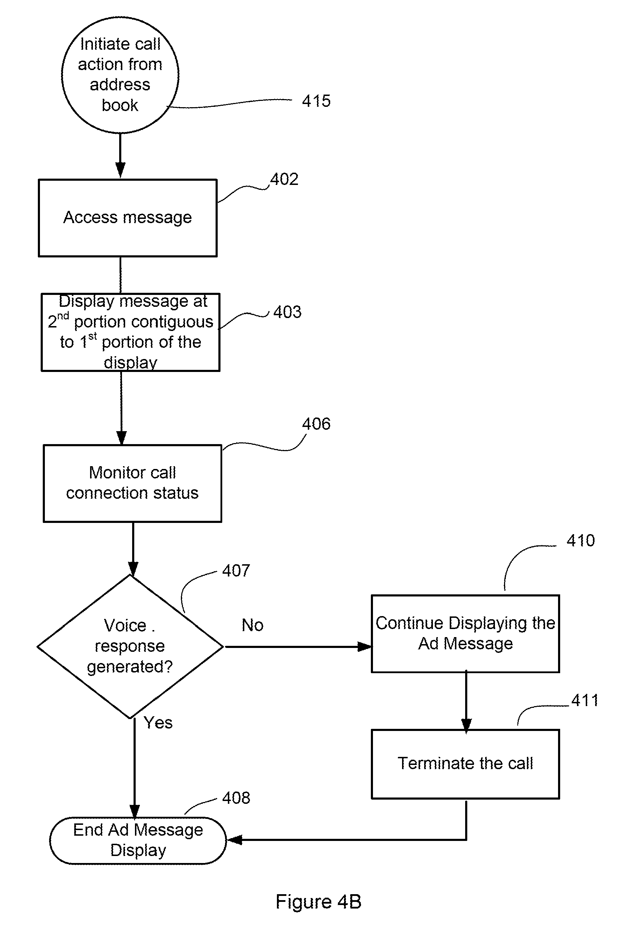

Figure 4B illustrates a further exemplary flow of interactions among components of the system of Figure 1 for delivering and displaying messages to communication devices. At step 415, a user initiates a call action other than by manually dialing the digits of the recipient phone number, such as from an address book application of communication device 102. At step 406, call connection status is monitored by call connection status monitor 292. At step 407, if the call connection status is indicated as call answered, such as via a voice response provided by the call recipient and detected at the communication device 102, then may trigger termination of the display of the message at step 408 on display 222 by message display module 291. Alternately, at step 410, if the call connection status as monitored by call connection status monitor 292 is indicated as a number busy, network busy, or invalid telephone number, message display module 291 may continue the display of the message on display portion 301 of display 222 in communication device 102. The user may terminate the call at step 411, at which point display of the message may terminate at step 408.

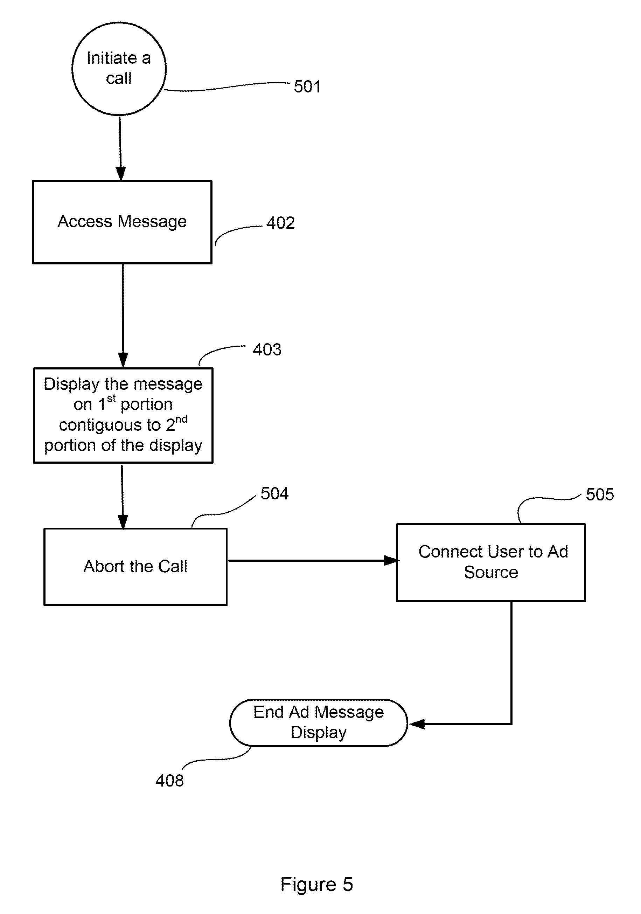

Figure 5 illustrates a variation of the exemplary flow of interactions of Figure 4. At step 504, the message delivery manager 190 may be configured such that the user can abort the attempted call, for example by depressing the END button or switch of communication device 102, at any time before a connection with the intended recipient is established.

In lieu of the attempted call, now aborted, at step 505 the user may be presented with an option to re-direct the call to obtain further information associated with the message being presented. The message may comprise, for example, an advertisement message or an emergency alert, with a hypertext link provided for directly connecting to the source or sponsor of the advertisement or emergency alert. By accepting the re-direction option, the user may now establish a telephone connection to a source associated with the advertisement message or emergency alert being displayed. Other types of connections with the source of the message are contemplated. For example, the user may be presented with a hypertext link via a web browser of communication device 102, to establish an on-line Internet-based connection. Once the user at step 505 requests and accepts connection to the source or sponsor of the message, then the display of the message may be terminated at step 408.

Although various embodiments have been described in the disclosure herein, it will be understood by those skilled in the art that further variations may be made without departing from the scope of the appended claims.

## Claims

1. A computer implemented method for delivery and display of a message (301) on a communication device (102), the method comprising:
receiving (401, 415, 501), at the communication device, a call initiation action associated with a recipient phone number being called;
accessing (402) the message accessibly stored in a memory;
initiating display (403) of the message on a display screen of the communication device on a first portion of the display screen contiguous with a second portion of the display screen for displaying the recipient phone number being called;
attempting (405) a call connection with the recipient phone number; and
receiving (406) a call connection status indication of the attempted call connection with the recipient phone number.

2. The method of claim 1 further comprising continuing (410) the display of the message on the display screen (222) of the communication device (102) at least until an indication of the call connection status is received (406) at the communication device.

3. The method of claim 1 further comprising:
receiving (504) a selection to abort an attempted phone call connection with the recipient phone number; and
providing (505) an option for redirection and connection of the communication device to a source associated with the message being displayed.

4. The method of claim 1, wherein the call initiation action comprises receiving (401, 415, 501) a first user input corresponding to a first digit of a sequence of digits of the recipient phone number.

5. The method of claim 4, further comprising continuing (410) to display the message (301) on the display screen (222) of the communication device (102) at least until entry of all sequential digits of the recipient phone number have been received.

6. The method of claim 4, wherein the call initiation action (401) further comprises receiving at least a second user input corresponding to a second digit of a sequence of digits of the recipient phone number, whereby at least a second message is accessed and displayed.

7. The method of claim 6, wherein the at least a second message comprises an advertising logo.

8. The method of any one of claims 1 to 6 wherein the message comprises an advertising message.

9. A computer program product storing instructions and data to configure a processor (238) to perform the method of any one of claims 1 to 8.

10. A communication device (102) for displaying a message (301), the communication device comprising:
a processor (238) and a memory (224, 226) coupled thereto, the memory storing instructions and data configuring the processor to perform the method according to any one of claims 1 to 8.

11. The communication device (102) of claim 10 comprising a wireless handheld communication device.

12. A computer implemented system for delivering and displaying (403) a message on a communication device, the system comprising:
a message display module configured to access the message from an accessible memory location, and to initiate display of the message on a first portion (301) of a display screen of the communication device, the first portion being contiguous with a second portion (302) of the display screen (222) for displaying a recipient phone number, in response to a call initiation action (401, 415, 501) associated with the recipient phone number; and
a call connection status monitor (292) configured to provide an indication of a call connection status (406) of an attempted call connection with the recipient phone number.

13. The system of claim 12, wherein the message display module (291) is further configured to display the message at least until entry of all sequential digits of the recipient number have been received.

14. The system of claims 12 or 13, wherein the message displayed in the first portion (301) of the display screen is displayed in a different display style from that of the second portion (302) of the display screen that displays the recipient phone number.

15. A communication device (102) for displaying a message, the communication device comprising:
a message display module (291) configured to access the message from an accessible memory location, and to initiate display of the message on a first portion (301) of a display screen of the communication device, the first portion being contiguous with a second portion (302) of the display screen for displaying a recipient phone number, the display of the message being initiated in response to a call initiation action (401, 415, 501) associated with the recipient phone number; and
a call connection status monitor (292) configured to provide an indication of a call connection status (406) of an attempted call connection with the recipient phone number.

## Amended claims

### Amended claims in accordance with Rule 137(2) EPC.

**1.** A computer implemented method for delivery and display of a message (301) on a communication device (102), the method comprising:
receiving (401, 415, 501), at the communication device, a call initiation action associated with a recipient phone number being called;
accessing (402) the message accessibly stored in a memory;
initiating display (403) of the message on a display screen of the communication device on a first portion of the display screen contiguous with a second portion of the display screen for displaying the recipient phone number being called;
attempting (405) a call connection with the recipient phone number; and
receiving (406) a call connection status indication of the attempted call connection with the recipient phone number.

**2.** The method of claim 1 further comprising continuing (410) the display of the message on the display screen (222) of the communication device (102) at least until an indication of the call connection status is received (406) at the communication device.

**3.** The method of claim 1 further comprising:
receiving (504) a selection to abort an attempted phone call connection with the recipient phone number; and
providing (505) an option for redirection and connection of the communication device to a source associated with the message being displayed.

**4.** The method of claim 1, wherein the call initiation action comprises receiving (401, 415, 501) a first user input corresponding to a first digit of a sequence of digits of the recipient phone number.

**5.** The method of claim 4, further comprising continuing (410) to display the message (301) on the display screen (222) of the communication device (102) at least until entry of all sequential digits of the recipient phone number have been received.

**6.** The method of claim 4, wherein the call initiation action (401) further comprises receiving at least a second user input corresponding to a second digit of a sequence of digits of the recipient phone number, whereby at least a second message is accessed and displayed.

**7.** The method of claim 6, wherein the at least a second message comprises an advertising logo.

**8.** The method of any one of claims 1 to 6 wherein the message comprises an advertising message.

**9.** A computer program product storing instructions and data to configure a processor (238) to perform the method of any one of claims 1 to 8.

**10.** A computer implemented system for delivering and displaying (403) a message on a communication device, the system comprising:
a message display module configured to access the message from an accessible memory location, and to initiate display of the message on a first portion (301) of a display screen of the communication device, the first portion being contiguous with a second portion (302) of the display screen (222) for displaying a recipient phone number, in response to a call initiation action (401, 415, 501) associated with the recipient phone number; and
a call connection status monitor (292) configured to provide an indication of a call connection status (406) of an attempted call connection with the recipient phone number.

**11.** The system of claim 10, wherein the message display module (291) is further configured to display the message at least until entry of all sequential digits of the recipient number have been received.

**12.** The system of claims 10 or 11, wherein the message displayed in the first portion (301) of the display screen is displayed in a different display style from that of the second portion (302) of the display screen that displays the recipient phone number.

**13.** The system of any one of claims 10 to 12, wherein the communication device (102) is a wireless handheld communication device.

**14.** The system of any one of claims 10 to 13, wherein the communication device (102) comprises:
a processor (238) and a memory (224, 226) coupled thereto, the memory storing instructions and data configuring the processor to perform the method according to any one of claims 1 to 8.
